# EUROPÄISCHE PATENTSCHRIFT

(11) **EP 1 282 943 B1**
(45) Veröffentlichungstag und Bekanntmachung des Hinweises auf die Patenterteilung: **15.08.2007**
(21) Anmeldenummer: 01936007.2
(22) Anmeldetag: 26.04.2001
(51) Int. Cl.: H04B 1/12

(54) **VERFAHREN UND VORRICHTUNG ZUR VERMEIDUNG EINES STÖRZUSTANDES**
METHOD AND DEVICE FOR AVOIDING A MALFUNCTION
PROCEDE ET DISPOSITIF POUR EVITER UN ETAT PERTURBATEUR

(30) Priorität: 17.05.2000 DE 10024375
(43) Veröffentlichungstag der Anmeldung: 12.02.2003
(73) Patentinhaber: Infineon Technologies AG, 81669 München (DE)
(72) Erfinder: KRANZ, Christian, 40885 Ratingen Lintorf (DE)
(74) Vertreter: Graf Lambsdorff, Matthias
(86) Internationale Anmeldenummer: PCT/DE2001/001630
(87) Internationale Veröffentlichungsnummer: WO 2001/089100

(56) Entgegenhaltungen:
- EP-A- 0 596 663
- WO-A-90/13188
- US-A- 5 966 684
- PATENT ABSTRACTS OF JAPAN vol. 013, no. 176 (E-749), 25. April 1989 (1989-04-25) & JP 01 005121 A (TOKYO GAS CO LTD;OTHERS: 01), 10. Januar 1989 (1989-01-10)

## Beschreibung

Die Erfindung betrifft ein Verfahren und eine Vorrichtung zur Vermeidung eines Störzustandes in Systemen mit Verarbeitung amplitudendiskreter Signale, insbesondere in Telekommunikationssystemen mit Burst-Betrieb.

Insbesondere in Audio-Pfaden solcher Systeme können Störzustände auftreten, wenn das Signal einen Signalpegel unterhalb eines Pegel-Schwellwertes und/oder das Signal eine zeitlich konstante Amplitude hat. Ursache hierfür ist die Eigenschaft einer oder mehrerer Verarbeitungseinheiten des Systems, auf die zuvor genannten Eigenschaften des zu verarbeitenden Signals mit der Erzeugung eines Störsignals zu reagieren und/oder ein vorhandenes Signal unerwünschtermaßen zu verstärken. Das vorhandene Signal ist beispielsweise auch ein Störsignal, etwa ein Mikrophonrauschen, welches in einem Telefon-Endgerät in den Empfangsweg eingestreut wird.

Ein erstes Beispiel für eine solche Verarbeitungseinheit ist ein digitales Filter, welches im digitalen Abschnitt eines Audio-Pfades, d.h. in Verarbeitungsrichtung vor einem Digital-Analog-Wandler (DAC) angeordnet ist. Vielfach werden solche Filter auf den Eingang des digitalen Verarbeitungsabschnitts rückgekoppelt, so daß sich das Problem der sogenannten Grenzzyklen stellt:
auf ein Signal mit so geringem Pegel, daß aufgrund der amplitudendiskreten Darstellung das Signal als Nullsignal dargestellt wird, reagiert das Filter mit der Erzeugung eines periodischen Signals. Dieses Störsignal wird zu den nachgeschalteten Verarbeitungseinheiten übertragen. Somit befindet sich das System in einem unerwünschten Störzustand.

Eine ähnliche Situation tritt ein, wenn an dem digitalen Filter ein Signal mit zeitlich konstanter Amplitude anliegt. In diesem Fall erzeugt das Filter ein Störsignal, das dem anliegenden Signal überlagert wird.

Ein weiteres Beispiel für eine derartige Verarbeitungseinheit ist ein sogenannter Noise-Shaper, der in Audio-Pfaden üblicherweise einem DAC in Signalverarbeitungsrichtung gesehen vorgeschaltet wird. Der Noise-Shaper dient dazu, Rauschsignale mit geringen Pegelwerten abzuschneiden bzw. zu unterdrücken. Es existieren Noise-Shaper, die in gleicher Weise wie das zuvor beschriebene digitale Filter reagieren. Weiterhin existieren Noise-Shaper, die unerwünschtermaßen Störsignale in den Verarbeitungsweg einstreuen bzw. einkoppeln, wenn das an dem Noise-Shaper anliegende zu verarbeitende Signal einen Pegel unterhalb eines Pegel-Schwellwertes hat. Das Störsignal wird also nur dann erzeugt, wenn ein Nutzsignal mit geringem Pegel anliegt. In diesem Störzustand des Systems werden Nutzsignal-/Störsignal-Verhältnisse erreicht, die deutlich schlechter als die in dem jeweiligen Standard geforderten Verhältnisse sind.

Zur Lösung dieses Problems ist es bekannt, zusätzliche Filterstrukturen einzusetzen, die die Störsignale herausfiltern. Nachteilig dabei ist, daß solche Lösungen meist aufwendig und damit kostenintensiv sind.

Weiterhin ist es bekannt, sogenannte Dither-Techniken einzusetzen. Dabei wird ein Dither-Signal in Signalverarbeitungsrichtung vor der Verarbeitungseinheit eingekoppelt, die den Störzustand verursachen kann. Das Dither-Signal ist ein Rauschsignal, das beispielsweise im digitalen Verarbeitungsweg als Folge von Zufallszahlen addiert wird. Diese Technik ist zum Beispiel in dem Buch "Digitale Audiosignal-Verarbeitung", 2. Auflage, 1997, von Udo Zölzer, erschienen im Teubner Verlag, Stuttgart, Deutschland (im folgenden kurz Zölzer '97 genannt) beschrieben. In Kapitel 2.2.1 werden dort die Dither-Techniken erläutert. Das Dither-Signal bewirkt eine Linearisierung der Quantisierungsstufen, d.h. der Stufen der Amplitudendiskretisierung der Signale. Die oben genannten Grenzzyklen können daher selbst bei Signalen vermieden werden, die einen deutlich geringeren Signalpegel haben als der Pegel, der der niedrigsten Quantisierungsstufe entspricht.

Nachteilig bei den Dither-Techniken ist jedoch, daß die Signalverarbeitung genauer ausgeführt werden muß, als es für die Signalverarbeitung ohne Dither-Signal erforderlich ist. Dies äußert sich insbesondere darin, daß zusätzliche Bits für die Darstellung der Dither-Zufallszahlen in einem digitalen Wort zur Verfügung gestellt werden. Dementsprechend ist Rechenleistung zur Verfügung zu stellen bzw. sind die Verarbeitungseinheiten aufwendig auszugestalten. Auch bei dieser Lösung werden daher Kosten dadurch verursacht, daß die durch Grenzzyklen oder andere Effekte möglichen Störzustände vermieden werden.

WO 90/13188 zeigt einen Empfänger, bei dem ein unmoduliertes Signal einem empfangenen IF Signal bei der Frequenz des IF Signals hinzugefügt wird.

JP 01005121 offenbart Rauschreduktion durch Hinzufügung einer Schwingung bei einer Mittenfrequenz eines Frequenzdiskriminators.

US 5,966,684 zeigt ein Verfahren zum Unterdrücken einer periodischen elektrischen Störung durch Erzeugen einer inversen Kopie der Störung.

EP 0 596 663 A2 zeigt einen Rauschformungs-Schaltkreis, der ein Spektrum des Quantisierungsrauschens auf der Basis der hörbaren Charakteristika modifiziert.

Aufgabe der vorliegenden Erfindung ist es, ein Verfahren und eine Vorrichtung der eingangs genannten Art anzugeben, die eine Vermeidung des Störzustandes ermöglichen und kostengünstig zu realisieren sind.

Diese Aufgabe wird durch ein Verfahren mit den Merkmalen des Anspruchs 1 und durch eine Vorrichtung mit den Merkmalen des Anspruchs 6 gelöst. Weiterbildungen sind Gegenstand der abhängigen Ansprüche.

Bei dem erfindungsgemäßen Verfahren wird ein künstliches Störsignal mit zumindest einer Störsignalfrequenz entlang dem Verarbeitungsweg des Systems hinzugefügt. Für den Fall, daß der Störzustand eintritt, wenn das Signal einen Signalpegel unterhalb eines Pegel-Schwellwertes hat, wird der Signalpegel des Störsignals so gewählt, daß der Signalpegel insgesamt den Pegel-Schwellwert überschreitet. Vorzugsweise wird der Signalpegel des Störsignals auf einen festen Wert festgelegt.

Durch das Hinzufügen des Störsignals mit zumindest einer Störsignalfrequenz wird aber in jedem Fall erreicht, daß die Signalamplitude nicht zeitlich konstant ist. Damit lassen sich insbesondere die zuvor beschriebenen Störzustände vermeiden.

Die Erzeugung eines künstlichen Störsignals mit zumindest einer Störsignalfrequenz ist auf einfache und damit kostengünstige Weise realisierbar. Insbesondere kann das Störsignal mit zumindest einer Störsignalfrequenz auf besonders einfache Weise im digitalen Signalverarbeitungsbereich erzeugt werden, zum Beispiel dadurch, daß einzelne Bit-Werte entsprechend der zumindest einen Störsignalfrequenz in das zu verarbeitende Signal eingefügt werden. Dies kann durch Hardware- und/oder Softwarelösungen realisiert werden.

Die Erfindung ist jedoch nicht auf das Hinzufügen eines digitalen Störsignals beschränkt. Beispielsweise kann das Störsignal in analoger Form, etwa vor oder nach der Übertragung eines Nutzsignals über eine Funkstrecke, hinzugefügt werden. Auch ein analoger Störsignalgenerator zur Erzeugung eines Störsignals mit zumindest einer Störsignalfrequenz ist auf einfache und damit kostengünstige Weise realisierbar.

Der Erfindung liegt die Erkenntnis zugrunde, daß insbesondere die zuvor beschriebenen Störzustände gerade dadurch vermieden werden können, daß ein Störsignal, also ein zusätzliches Signal mit zumindest einer Signalfrequenz, hinzugefügt wird. Zwar wird dadurch das System wiederum in einen Störzustand versetzt; dieser Störzustand ist jedoch im Gegensatz zu dem vermiedenen Störzustand kontrollierbar. In der Praxis wird daher darauf zu achten sein, daß die kontrollierbare Störung in dem jeweiligen Anwendungsbereich tolerierbar ist. Ein wesentlicher Vorteil der Erfindung besteht also darin, daß ein unkontrollierbarer, unter Umständen zeitlich veränderlicher Störzustand vermieden wird und ein kontrollierbarer Störzustand entweder auf einfache, zuverlässige Weise beseitigbar ist oder so eingestellt werden kann, daß er keine praktischen Auswirkungen hat.

Im Gegensatz zu Dither-Techniken muß keine zusätzliche Rechenleistung oder Verarbeitungsleistung zur Verfügung gestellt werden, um den unerwünschten Störzustand zu vermeiden. Insbesondere muß keine Linearisierung der Quantisierungsstufen erfolgen. Es können somit billigere Verarbeitungseinheiten eingesetzt werden und/oder die vorhandene Leistung effektiver genutzt werden.

Bei einer Weiterbildung des Verfahrens ist das hinzugefügte Störsignal ein Tonsignal, dessen Grundfrequenz im wesentlichen einen diskreten Wert hat. Ein unendlich scharfer, diskreter Wert ist aus physikalischen Gründen nicht erreichbar, da der Pegel des Tonsignals einen endlichen Wert hat. Unter einem Tonsignal wird nicht nur ein Signal verstanden, das bei einer Frequenz im hörbaren Bereich liegt, sondern ein Signal, das im allgemeineren Sinne einem Ton entspricht, d.h. dessen Grundfrequenz im wesentlichen einen diskreten Wert hat. Zusammen mit der Grundfrequenz können bei der Erzeugung des Tonsignals und/oder bei der weiteren Verarbeitung des Tonsignals höhere, den zugehörigen Oberschwingungen bzw. Oberwellen entsprechende Frequenzen hinzukommen.

Die Verwendung eines Tonsignals hat den Vorteil, daß seine Erzeugung in besonders einfacher Weise möglich ist und daß das Störsignal leicht anhand seiner Grundfrequenz identifizierbar ist.

Bei einer Weiterbildung des Verfahrens wird das in dem System, dessen Störzustand zu vermeiden ist, zu verarbeitende amplitudendiskrete Signal in ein Audiosignal umgesetzt. Gerade in solchen Systemen wirken sich unkontrollierbare Störzustände besonders schädlich aus und sind meist nicht tolerierbar. Beispielsweise wird im Grenzzyklus ein unkontrollierbares sinusförmiges Signal oder periodisches Rechtecksignal erzeugt, welches in einen deutlich hörbaren Ton umgesetzt wird. Dies wird durch die Erfindung vermieden. Vorzugsweise weist das nach der Erfindung hinzugefügte Störsignal eine Grundfrequenz auf, die außerhalb des hörbaren Frequenzbereichs oder außerhalb des von dem System ausgegebenen oder verarbeiteten Audio-Frequenzbereichs liegt. Der nach der Erfindung absichtlich erzeugte Störzustand hat somit keine negativen Auswirkungen oder allenfalls geringfügig hörbare Auswirkungen in dem Audiosignal.

Eine besonders bevorzugte Weiterbildung betrifft Systeme, in denen systembedingt ein erstes Störsignal in dem Verarbeitungsweg vorhanden ist oder in diesen eingekoppelt wird. Insbesondere zählen hierzu Telekommunikationssysteme, in denen digitalisierte Information paketweise, d.h. in sog. Bursts, übertragen werden. Die einzelnen Bursts folgen meist in regelmäßigen Abständen, so daß sich die Übertragung von Bursts mit einer bestimmten Frequenz wiederholt. Diese sog. Burst-Wiederholfrequenz beträgt beispielsweise bei Systemen nach dem DECT-Standard 100Hz. Insbesondere durch Vorgänge in Telefon-Endgeräten, etwa induktive oder kapazitive Effekte, wird ein entsprechendes Störsignal in den Signal-Verarbeitungsweg eingekoppelt. Es existiert somit ein erstes Störsignal, das eine erste Grundfrequenz und ggf. weitere, höhere Frequenzen (Oberfrequenzen) aufweist.

Gemäß der besonders bevorzugten Weiterbildung des erfindungsgemäßen Verfahrens wird das entlang dem Verarbeitungsweg erfindungsgemäß hinzugefügte, zweite Störsignal mit einer zweiten Grundfrequenz oder mit einer Frequenz einer Schwingung hinzugefügt, wobei die zweite Grundfrequenz oder die Frequenz der Oberwelle gleich der Frequenz der ersten Grundfrequenz oder gleich einer von deren Oberfrequenzen ist.

Somit wird der potentiell mögliche Störzustand des Systems, der insbesondere durch Grenzzyklen hervorgerufen wird, vermieden, indem das zweite Störsignal hinzugefügt wird, wobei die Frequenz des zweiten Störsignals so mit der Frequenz des ohnehin bereits vorhandenen ersten Störsignals abgestimmt wird, daß das hinzugefügte, zweite Störsignal keine wesentliche zusätzliche Störung bewirkt. Insbesondere wenn eine Umsetzung in Audiosignale stattfindet, ist die zusätzliche Störung nicht oder kaum hörbar.

Bei einer Weiterbildung, bei der der zu vermeidende Störzustand durch eine entlang dem Verarbeitungsweg angeordnete Verarbeitungseinheit des Systems erzeugt oder miterzeugt werden kann und wobei das erste Störsignal in Verarbeitungsrichtung erst an oder hinter der Verarbeitungseinheit anliegt, wird das zweite Störsignal in Verarbeitungsrichtung vor oder an der Verarbeitungseinheit mit einem Störsignalpegel hinzugefügt, der hinter der Verarbeitungeinheit mit einem geringeren Anteil zu dem Gesamt-Signalpegel beiträgt als das erste Störsignal. Daher ist das Störsignal kaum wahrnehmbar.

Die erfindungsgemäße Vorrichtung zur Vermeidung eines Störzustandes in Systemen mit Verarbeitung amplitudendiskreter Signale weist folgendes auf:

Einen Abschnitt eines Signalverarbeitungsweges, wobei entlang des Signalverarbeitungswegs eines oder mehrere der amplitudendiskreten Signale verarbeitbar und übertragbar sind, einen Störsignalgenerator zur Erzeugung eines künstlichen Störsignals mit zumindest einer Störsignalfrequenz und Mittel zum Einkoppeln und Hinzufügen des Störsignals in den Abschnitt des Signalverarbeitungsweges.

Vorteile und Weiterbildungen der erfindungsgemäßen Vorrichtung sind unmittelbar aus der Beschreibung des erfindungsgemäßen Verfahrens ersichtlich.

Die Vorrichtung ist insbesondere ein schnurloses Telefon. Vorzugsweise ist der Abschnitt des Signalverarbeitungsweges, in den das Störsignal hinzugefügt wird, ausgestaltet, das oder die amplitudendiskreten Signale zu übertragen.

Eine Weiterbildung der Vorrichtung weist eine Signalverarbeitungseinheit zum Verarbeiten der amplitudendisktreten Signale auf, von der bei Ausbleiben eines Signals mit ausreichendem Pegel und/oder bei Anliegen eines Signals mit zeitlich konstanter Amplitude der Störzustand erzeugt wird, wobei die Mittel zum Einkoppeln und Hinzufügen des Störsignals in Richtung des Verarbeitungsweges vor oder an der Signalverarbeitungseinheit angeordnet sind.

Insbesondere ist die Signalverarbeitungseinheit ein digitales Filter oder ein digitaler Noise-Shaper zum Abschneiden von Signalanteilen, insbesondere Rauschen, mit geringem Signalpegel.

Vorzugsweise ist der Störsignalgenerator ein Tongenerator zur Erzeugung eines Tonsignals, dessen Grundfrequenz im wesentlichen einen diskreten Wert hat.

Die Erfindung wird nunmehr anhand von Ausführungsbeispielen näher erläutert. Hierbei wird Bezug auf die beigefügte Zeichnung genommen. Die einzige Figur der Zeichnung,

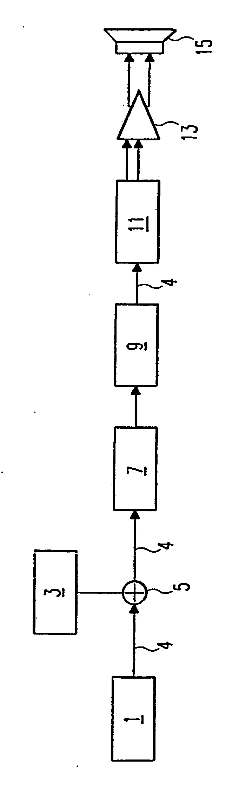

- Fig. 1: zeigt eine schematische Darstellung eines Audio-Pfades im Empfangsweg eines DECT-Telefons.

Fig. 1 zeigt eine Signalquelle 1, die für weitere, nicht näher dargestellte Bauteile eines DECT-Telefons wie Antenneneinheit, analoge Signalverarbeitungseinheiten, Analog-Digital-Wandler steht. Über einen Signalverarbeitungsweg 4 wird das Signal aus der Signalquelle 1 bis zu einem Lautsprecher 15 übertragen. Am Ausgang der Signalquelle 1 liegt das Signal als amplitudendiskretes Signal in digitalisierter Form vor.

In Richtung des Signalverarbeitungsweges 4 erreicht das Signal ein digitales Filter 7 zum Herausfiltern unerwünschter Frequenzanteile, einen digitalen Noise-Shaper 9 zum Abtrennen von Rauschen mit geringem Signalpegel und einen Digital-Analog-Converter (DAC) 11, in dem das Signal in ein analoges Audiosignal umgewandelt wird. In Verarbeitungsrichtung hinter dem DAC 11 befinden sich ein Verstärker 13 zum Verstärken des Audiosignals und der Lautsprecher 15 zur akustischen Ausgabe des verstärkten Audiosignals.

Das digitale Filter 7 und der digitale Noise-Shaper 9 haben die Eigenschaft, ein unerwünschtes Störsignal zu erzeugen und über ihren Ausgang in den Signalverarbeitungsweg 4 einzubringen, wenn der Signalpegel des an ihrem jeweiligen Eingang anliegenden Signals einen Pegel-Schwellwert unterschreitet und/oder das Signal eine zeitlich konstante Amplitude hat.

Zur Vermeidung des Störsignals ist ein Tongenerator 3 vorgesehen, der ein zusätzliches Störsignal mit einer Grundfrequenz von 50 Hz erzeugt. Das zusätzliche Störsignal wird mittels eines Addierers 5 in den Signalverarbeitungsweg 4 eingekoppelt, und zwar unabhängig davon, ob das am Ausgang der Signalquelle 1 anliegende Signal zur Erzeugung des unerwünschten Störsignals in dem digitalen Filter 7 und/oder in dem Noise-Shaper 9 führen würde.

Aufgrund der Burst-Wiederholfrequenz von 100Hz, die DECT-Systemen inhärent ist, wird durch kapazitive, induktive und/oder weitere Effekte eine Störung von 100Hz in den analogen Abschnitt des Signalverarbeitungsweges 4 eingestreut. Diese Störung liegt daher noch nicht am Eingang des digitalen Filters 7 und des Noise-Shapers 9 an, sondern erst an oder hinter dem DAC 11.

Die Grundfrequenz des in dem Tongenerator 3 erzeugten zusätzlichen Störsignals wurde so gewählt, daß einerseits die Grundfrequenz in einem Frequenzbereich liegt, der von den meisten Menschen nicht oder nur bei hoher Intensität wahrnehmbar ist. Andererseits liegt die Frequenz der ersten Oberschwingung einer Grundschwingung von 50 Hz bei dem Wert 100Hz. Daher wird eine etwaige in dem Tongenerator 3 oder entlang dem Signalverarbeitungsweg 4 erzeugte Oberschwingung bzw. Oberwelle mit dieser Frequenz bei der Ausgabe des AudioSignals durch den Lautsprecher 15 nicht als zusätzlicher, störender Ton wahrgenommen, da seine Frequenz gleich der Burst-Wiederholfrequenz ist.

Weiterhin wurde der Pegel des zusätzlichen, in dem Tongenerator 3 erzeugten Störsignals so klein gewählt, daß das digitale Filter 7 und der Noise-Shaper 9 nicht das unerwünschte Störsignal erzeugen, jedoch der Störpegel im analogen Abschnitt des Signalverarbeitungsweges 4 nicht oder kaum wahrnehmbar erhöht wird.

Gegenüber den bekannten Dither-Techniken, bei denen die Verarbeitungsleistung bei der Verarbeitung der digitalen Signale erhöht werden muß, kann gemäß der Erfindung auf eine Erhöhung der Verarbeitungsleistung verzichtet werden, wodurch Kosten gespart werden. Alternativ kann die erhöhte Verarbeitungsleistung genutzt werden, um das Nutzsignal-Störsignal-Verhältnis zu verbessern. So wurde beispielsweise bei der Ausführung der Erfindung mit einem digitalen Noise-Shaper wie er auch bei der Anwendung von Dither-Techniken zum Einsatz kommt, der Signal-Rauschabstand um +12dB verbessert.

In entsprechender Weise wie bei dem Ausführungsbeispiel für ein DECT-Telefon kann die Erfindung auch in anderen Systemen zum Einsatz kommen, wie zum Beispiel in einem GSM (Global System for Mobile Communication) oder dem UMTS (Universal Mobile Telecommunication System). Weitere Beispiele sind Systeme nach dem Blue-Tooth-Standard und ganz allgemein Systeme mit TDMA (Time Division Multiple Access)- Übertragung. Bei der Auswahl der Frequenz des Störsignals, das absichtlich hinzugefügt wird, ist dann auf die jeweiligen system-inhärenten Frequenzen, insbesondere Burst-Wiederholfrequenzen, abzustellen.

## Patentansprüche

1. Verfahren zur Vermeidung eines Störzustandes in Systemen mit Verarbeitung amplitudendiskreter Signale in Telekommunikationssytemen mit Burst-Betrieb mit einer Burst-Wiederholfrequenz, wobei der Störzustand dann eintritt, wenn das Signal einen Signalpegel unterhalb eines Pegel-Schwellwertes und/oder das Signal eine zeitlich konstante Amplitude hat, wobei systembedingt ein erstes Störsignal mit der Burst-Wiederholfrequenz in dem Verarbeitungsweg vorhanden ist oder in diesen eingekoppelt wird, wobei
ein künstliches Störsignal mit zumindest einer Störsignalfrequenz entlang dem Verarbeitungsweg des Systems hinzugefügt wird, so daß der Signalpegel den Pegel-Schwellwert überschreitet bzw. zumindest eine zeitlich konstante Amplitude vermieden wird, wobei die Störsignalfrequenz gleich der Burst-Wiederholfrequenz oder gleich einer von deren Oberwellen ist.

2. Verfahren nach Anspruch 1,
**dadurch gekennzeichnet, daß**
das hinzugefügte Störsignal ein Tonsignal ist, dessen Grundfrequenz im wesentlichen einen diskreten Wert hat.

3. Verfahren nach Anspruch 1 oder 2,
**dadurch gekennzeichnet, daß**
das amplitudendiskrete Signal in ein Audiosignal umgesetzt wird.

4. Verfahren nach einem der vorhergehenden Ansprüche,
**dadurch gekennzeichnet, daß**
das hinzugefügte Störsignal eine Grundfrequenz aufweist, die außerhalb des hörbaren Frequenzbereichs oder außerhalb des von dem System ausgegebenen oder verarbeiteten Audio-Frequenzbereichs liegt.

5. Verfahren nach Anspruch 1,
**dadurch gekennzeichnet, daß**
der Störzustand durch eine entlang dem Verarbeitungsweg angeordnete Verarbeitungseinheit (7, 9) des Systems erzeugt oder miterzeugt werden kann, wobei das erste Störsignal in Verarbeitungsrichtung erst an oder hinter der Verarbeitungseinheit (7, 9) anliegt und wobei das zweite Störsignal in Verarbeitungsrichtung vor oder an der Verarbeitungseinheit (7, 9) mit einem Störsignalpegel hinzugefügt wird, der hinter der Verarbeitungseinheit (7, 9) mit einem geringeren Anteil zu dem Gesamt-Signalpegel beiträgt als das erste Störsignal.

6. Vorrichtung zur Vermeidung eines Störzustandes in Systemen mit Verarbeitung amplitudendiskreter Signale in Telekommunikationssystemen mit Burst-Betrieb mit einer Burst-Wiederholfrequenz, wobei der Störzustand dann eintritt, wenn das Signal einen Signalpegel unterhalb eines Pegel-Schwellwertes und/oder das Signal eine zeitlich konstante Amplitude hat, wobei systembedingt ein erstes Störsignal mit der Burst-Wiederholfrequenz in dem Verarbeitungsweg vorhanden ist oder in diesen eingekoppelt wird, und wobei die Vorrichtung aufweist:
- einen Abschnitt eines Signalverarbeitungsweges (4), wobei entlang dem Signalverarbeitungsweg (4) eines oder mehrere der amplitudendiskreten Signale verarbeitbar und übertragbar sind,
- einen Störsignalgenerator (3) zur Erzeugung eines künstlichen Störsignals mit mindestens einer Störsignal-frequenz, die gleich der der Burst-Wiederholfrequenz oder gleich einer von deren Oberwellen ist und
- Mittel (5) zum Einkoppeln und Hinzufügen des Störsignals in den Abschnitt des Signalverarbeitungsweges (4), so daß der Signalpegel den Pegel-Schwellwert überschreitet bzw. zumindest eine zeitlich konstante Amplitude vermieden wird.

7. Vorrichtung nach Anspruch 6, insbesondere schnurloses Telefon,
**dadurch gekennzeichnet, daß**
der Abschnitt des Signalverarbeitungsweges (4) ausgestaltet ist, das oder die amplitudendiskreten Signale zu übertragen.

8. Vorrichtung nach Anspruch 6 oder 7,
mit einer Signalverarbeitungseinheit (7, 9) zum Verarbeiten der amplitudendiskreten Signale, von der bei Ausbleiben eines Signals mit ausreichendem Pegel und/oder bei Anliegen eines Signals mit zeitlich konstanter Amplitude der Störzustand erzeugt wird, wobei die Mittel (5) zum Einkoppeln und Hinzufügen des Störsignals in Richtung des Verarbeitungsweges (4) vor oder an der Signalverarbeitungseinheit (7, 9) angeordnet sind.

9. Vorrichtung nach Anspruch 8,
**dadurch gekennzeichnet, daß**
die Signalverarbeitungseinheit (7) ein digitales Filter ist.

10. Vorrichtung nach Anspruch 8,
**dadurch gekennzeichnet, daß**
die Signalverarbeitungseinheit (9) ein digitaler Noise-Shaper zum Abschneiden von Signalanteilen, insbesondere Rauschen, mit geringem Signalpegel ist.

11. Vorrichtung nach einer der Ansprüche 6 bis 10,
**dadurch gekennzeichnet, daß**
der Störsignalgenerator (3) ein Tongenerator zur Erzeugung eines Tonsignals ist, dessen Grundfrequenz im wesentlichen einen diskreten Wert hat.

## Claims

1. Method for preventing interference in systems processing discrete-amplitude signals in telecommunications systems operating in burst mode at a burst repetition rate, where the interference occurs when the signal has a signal level below a level threshold value and/or the signal has an amplitude which is constant over time, where depending on the system, a first interference signal at the burst repetition rate is present in the processing path or is injected into it, where an artificial interference signal having at least one interference signal frequency is added along the processing path in the system, so that the signal level exceeds the level threshold value or at least an amplitude which is constant over time is prevented where the interference signal frequency is equal to the burst repetition rate or is equal to one of the latter's harmonics.

2. Method according to Claim 1,
**characterized in that**
the added interference signal is a sound signal whose fundamental frequency essentially has a discrete value.

3. Method according to Claim 1 or 2,
**characterized in that**
the discrete-amplitude signal is converted into an audio signal.

4. Method according to one of the preceding claims,
**characterized in that**
the added interference signal has a fundamental frequency which is situated outside the audible frequency range or outside the audio frequency range which is output or processed by the system.

5. Method according to Claim 1,
**characterized in that**
the interference can be generated or concomitantly generated by a processing unit (7, 9), arranged along the processing path, in the system, the first interference signal being present in the processing direction only at or downstream of the processing unit (7, 9), and the second interference signal being added in the processing direction upstream of or at the processing unit (7, 9) with an interference signal level which contributes a smaller proportion to the overall signal level downstream of the processing unit (7, 9) than the first interference signal.

6. Apparatus for preventing interference in systems processing discrete-amplitude signals in telecommunications systems operating in burst mode at a burst repetition rate, where the interference occurs when the signal has a signal level below a level threshold value and/or the signal has an amplitude which is constant over time, where, depending on the system, a first interference signal at the burst repetition rate is present in the processing path or is injected into it, and where the apparatus has:
- a section of a signal processing path (4), with one or more of the discrete-amplitude signals being able to be processed and transmitted along the signal processing path (4),
- an interference signal generator (3) for generating an artificial interference signal having at least one interference signal frequency which is equal to that of the burst repetition rate or is equal to one of the latter's harmonics, and
- means (5) for injecting and adding the interference signal into the section of the signal processing path (4), so that the signal level exceeds the level threshold value or at least an amplitude which is constant over time is prevented.

7. Apparatus according to Claim 6, particularly a cordless telephone,
**characterized in that**
the section of the signal processing path (4) is designed to transmit the discrete-amplitude signal or signals.

8. Apparatus according to Claim 6 or 7,
having a signal processing unit (7, 9) for processing the discrete-amplitude signals which generates the interference in the absence of a signal having a sufficient level and/or in the presence of a signal having an amplitude which is constant over time, the means (5) for injecting and adding the interference signal being arranged in the direction of the processing path (4) upstream of or at the signal processing unit (7, 9).

9. Apparatus according to Claim 8,
**characterized in that**
the signal processing unit (7) is a digital filter.

10. Apparatus according to Claim 8,
**characterized in that**
the signal processing unit (9) is a digital noise shaper for cutting off signal components, particularly noise, having a low signal level.

11. Apparatus according to one of Claims 6 to 10,
**characterized in that**
the interference signal generator (3) is a sound generator for generating a sound signal whose fundamental frequency essentially has a discrete value.

## Revendications

1. Procédé permettant d'éviter un état parasite dans des systèmes à traitement de signaux discrets en amplitude dans des systèmes de télécommunications à fonctionnement en salves à une fréquence de récurrence des salves, l'état parasite n'apparaissant que lorsque le signal a un niveau de signal inférieur à une valeur seuil de niveau et/ou que lorsque le signal a une amplitude constante dans le temps, un premier signal parasite à la fréquence de récurrence des salves étant présent dans la voie de traitement ou étant injecté dans cette voie de traitement en raison du système,
un signal parasite de synthèse ayant au moins une fréquence de signal parasite étant ajouté le long de la voie de traitement du système de sorte que le niveau de signal devient supérieur à la valeur seuil de niveau respectivement ou que l'on évite au moins une amplitude constante dans le temps, la fréquence du signal parasite étant égale à la fréquence de récurrence des salves ou à l'une des ses harmoniques.

2. Procédé selon la revendication 1, **caractérisée en ce que** le signal parasite ajouté est un signal audio dont la fréquence fondamentale a essentiellement une valeur discrète.

3. Procédé selon la revendication 1 ou 2, **caractérisé en ce que** le signal discret en amplitude est converti en un signal audio.

4. Procédé selon l'une des revendications précédentes,
**caractérisé en ce que** le signal parasite ajouté a une fréquence fondamentale qui se trouve à l'extérieur du domaine fréquentiel audible ou à l'extérieur du domaine fréquentiel audio traité ou délivré par le système.

5. Procédé selon la revendication 1, **caractérisé en ce que** l'état parasite peut être généré ou généré simultanément par une unité de traitement (7, 9) placée sur la voie de traitement, le premier signal parasite étant seulement appliqué au niveau de l'unité de traitement (7, 9) ou en arrière de celle-ci par référence au sens de traitement et le deuxième signal parasite étant ajouté au niveau de l'unité de traitement (7, 9) ou en arrière de celle-ci par référence au sens de traitement avec un niveau de signal parasite qui contribue en tant que premier signal parasite, en arrière de l'unité de traitement (7, 9) en une proportion plus petite, au niveau de signal total.

6. Dispositif permettant d'éviter un état parasite dans des systèmes à traitement de signaux discrets en amplitude dans des systèmes de télécommunications à fonctionnement en salves à une fréquence de récurrence des salves, l'état parasite n'apparaissant que lorsque le signal a un niveau de signal inférieur à une valeur seuil de niveau et/ou que lorsque le signal a une amplitude constante dans le temps, un premier signal parasite à la fréquence de récurrence des salves étant présent dans la voie de traitement ou étant injecté dans cette voie de traitement en raison du système, et le dispositif comportant :
- une portion d'une voie de traitement de signal (4), un ou plusieurs des signaux discrets en amplitude pouvant être traités et transmis sur la voie de traitement de signal (4),
- un générateur de signal parasite (3) destiné à générer un signal parasite de synthèse ayant au moins une fréquence de signal parasite qui est égale à la fréquence de récurrence des salves ou à l'une de ses harmoniques et
- des moyens (5) destinés à injecter et à ajouter le signal parasite dans la portion de la voie de traitement de signal (4) de telle sorte que le niveau de signal devient supérieur à la valeur seuil de niveau ou que l'on évite au moins une amplitude constante dans le temps.

7. Dispositif selon la revendication 6, notamment un téléphone sans fil, **caractérisé en ce que** la portion de la voie de traitement de signal (4) est conformée de façon à transmettre le ou les signaux discrets en amplitude.

8. Dispositif selon la revendication 6 ou 7, qui comporte une unité de traitement de signal (7, 9) destinée à traiter les signaux discrets en amplitude, ledit dispositif générant l'état parasite lorsqu'un signal n'a pas un niveau suffisant et/ou lorsqu'il est appliqué un signal d'amplitude constante dans le temps, les moyens (5) destinés à injecter et à ajouter le signal parasite étant placés au niveau de l'unité de traitement de signal (7, 9) ou en avant de celle-ci par référence à la direction de la voie de traitement (4).

9. Dispositif selon la revendication 8, **caractérisé en ce que** l'unité de traitement de signal (7) est un filtre numérique.

10. Dispositif selon la revendication 8, **caractérisé en ce que** l'unité de traitement de signal (9) est un conformateur de bruit numérique destiné à découper des portions de signal, notamment du bruit, avec un niveau de signal bas.

11. Dispositif selon l'une des revendications 6 à 10, **caractérisé en ce que** le générateur de signal parasite (3) est un générateur audio destiné à générer un signal audio dont la fréquence fondamentale a essentiellement une valeur discrète.
